Europäisches Patentamt

European Patent Office

Office européen des brevets

(19)

(11) **EP 0 545 475 B1**

(12) **FASCICULE DE BREVET EUROPEEN**

(45) Date de publication et mention
de la délivrance du brevet:
**09.10.1996 Bulletin 1996/41**

(51) Int Cl.⁶: **H04N 1/41**, G06T 11/00

(21) Numéro de dépôt: **92203649.6**

(22) Date de dépôt: **26.11.1992**

(54) **Méthodes et dispositifs de synthèse de signaux de texture**

Verfahren und Einrichtung zur Restitution von Textursignalen

Method and apparatus for synthesizing texture signals

(84) Etats contractants désignés:
**DE FR GB**

(30) Priorité: **04.12.1991 FR 9114999**

(43) Date de publication de la demande:
**09.06.1993 Bulletin 1993/23**

(73) Titulaires:
- **LABORATOIRES D'ELECTRONIQUE PHILIPS
  S.A.S.
  94450 Limeil-Brévannes (FR)**
  Etats contractants désignés:
  **FR**
- **Philips Electronics N.V.
  5621 BA Eindhoven (NL)**
  Etats contractants désignés:
  **DE GB**

(72) Inventeurs:
- **Sirat, Jacques, Société Civile S.P.I.D.
  F-75008 Paris (FR)**
- **Oddou, Christophe Société Civile S.P.I.D.
  F-75008 Paris (FR)**

(74) Mandataire: **Landousy, Christian et al
Société Civile S.P.I.D.
156, Boulevard Haussmann
75008 Paris (FR)**

(56) Documents cités:
EP-A- 0 087 284          EP-A- 0 437 002
US-A- 4 013 828

- PATTERN RECOGNITION. vol. 23, no. 9, 1990,
  OXFORD pages 953 - 960 REED ET AL 'Texture
  Segmentation using a diffusion region growing
  technique'
- IEEE MEDITERRANEAN ELECTROTECHNICAL
  CONFERENCE 1983 vol. 2, pages 1 - 2 KOCHER
  & KUNT "A contour-texture approach to picture
  coding"
- PROCEEDINGS OF THE IEEE. vol. 73, no. 4, Avril
  1985, NEW YORK US pages 549 - 574 KUNT ET
  AL 'Second-Generation Image-Coding
  Techniques'
- PATENT ABSTRACTS OF JAPAN vol. 15, no. 406
  (P-1263)16 Octobre 1991 & JP-A-31 64 876
- SPIE VISUAL COMMUNICATION AND IMAGE
  PROCESSING 1988 vol. 1001, pages 582 - 590
  MICHEL ET AL 'Unsupervised Segmentation of
  Texture Images'
- IEEE TRANSACTIONS ON PATTERN ANALYSIS
  AND MACHINE INTELLIGENCE vol. 3, no. 5,
  Septembre 1981, pages 520 - 533 GAGALOWICZ
  'A New Method for Texture Fields Synthesis:
  Some Applications to the Study of Human
  Vision'

## Description

La présente invention concerne une méthode de synthèse de texture à partir de signaux vidéo numériques, ainsi qu'une méthode de transmission et/ou stockage de signaux de texture prévoyant à la réception une phase de synthèse de texture qui comprend les étapes de ladite méthode de synthèse. L'invention concerne également un dispositif de synthèse et des dispositifs ou systèmes de transmission et/ou stockage pour la mise en oeuvre de ces méthodes.

Le document "A new method for texture fields synthesis : some applications to the study of human vision", de A. Gagalowicz, publié dans la revue "IEEE Transactions on Pattern Analysis and Machine Intelligence", vol. PAMI-3, n°5, septembre 1981, pp. 520-533, décrit une méthode d'analyse de textures prenant tout particulièrement en compte, comme paramètres d'analyse, des données statistiques qui peuvent être associées aux zones texturées d'une image. En effet, les textures rencontrées par exemple sur des images de télévision, qui devraient théoriquement être formées par la répétition périodique d'un ou plusieurs motifs, ne sont pas, en fait, des agencements rigoureux de tels éléments de base, et les modèles qui décrivent ces textures intègrent à juste titre cette notion d'aléatoire. En partant de ces considérations statistiques générales, le document s'attache notamment à étudier, en s'appuyant sur des considérations psychovisuelles, dans quelle mesure des paramètres tels que les moments statistiques du second ordre peuvent conduire à une discrimination locale de textures que l'oeil distingue.

Si l'on souhaite réaliser la synthèse d'une texture conformément à un original, on peut donc se servir de telles statistiques du second ordre comme de paramètres pertinents pour la discrimination visuelle de deux textures (en l'occurrence, l'original et la texture synthétisée). Néanmoins, si l'on fait globalement converger les statistiques du second ordre d'une image de bruit blanc vers celles de la texture d'origine, on perd la structure globale qui peut exister dans certaines textures régulières (par exemple, du type mur de briques). L'image résultante semble alors, à la manière d'une sorte de "patchwork", constituée de lambeaux de texture, isolément bien formés mais qui paraissent assemblés de manière incohérente, sans lien entre eux.

Un premier but de l'invention est de proposer une méthode de synthèse de texture grâce à laquelle l'aspect global de la texture restituée n'est plus handicapé par le manque de cohérence signalé ci-dessus.

L'invention concerne à cet effet une méthode comprenant les étapes suivantes :

(a) à partir de ceux de ces signaux qui sont associés à un ensemble de points d'image ou pixels constituant un échantillon dit de référence, calcul et mémorisation de caractéristiques structurelles dudit échantillon ou de valeurs qui leur sont directement liées ;
(b) à partir des caractéristiques ainsi calculées et de l'échantillon, restitution d'une image de synthèse approximative par croissance progressive dans une région prédéterminée ;
(c) subdivision de ladite image de synthèse approximative en blocs de pixels de taille identique ;
(d) à partir de l'échantillon, constitution d'un dictionnaire de stockage de blocs de même taille que ceux de ladite image de synthèse approximative;
(e) en fonction d'un critère prédéterminé, décoration par remplacement de chaque bloc de cette image de synthèse approximative par un bloc du dictionnaire, pour constituer une image de synthèse définitive.

Pour comprendre l'intérêt des principes ainsi définis, on peut rapprocher l'opération de synthèse proposée du phénomène physique de la cristallisation. Lors de la formation d'un cristal, une décroissance trop rapide de la température entraîne un début de cristallisation en des endroits différents du magma initial. Ces différentes zones de cristallisation se développent jusqu'à se rencontrer, et l'on observe alors, à leurs interfaces de rencontre, une rupture de la continuité cristalline, due au fait que les mailles des différentes zones ne s'agencent pas exactement. Pour améliorer cet alignement des mailles aux interfaces, on peut soit procéder à un recuit, ou réchauffement du cristal, qui permet un réarrangement des zones déjà formées, soit, selon une méthode nettement plus rapide, prévenir l'apparition de différents points de cristallisation en imposant au cristal d'être refroidi initialement en un endroit déterminé, puis en étendant le refroidissement autour de cette zone refroidie formée initialement : la cristallisation s'effectue maintenant de façon progressive en faisant entrer successivement en contact avec le cristal déjà formé de faibles quantités de cristal en fusion que l'on laisse refroidir.

En poursuivant l'analogie entre cristal et texture, on peut considérer que l'assemblage de lambeaux de texture sans grande cohérence entre eux aux frontières d'assemblage constitue lui aussi une rupture anormale d'une continuité qui ne devrait pas être perdue. Comme dans le cas de la cristallisation forcée à partir d'une zone initiale, on a alors imaginé d'autoriser de façon similaire autour d'une sorte de pavé ou échantillon initial dont les niveaux de gris sont connus (et choisi par exemple sensiblement au centre de l'image à synthétiser) une croissance progressive de la synthèse dans des sortes de couronnes successives entourant ledit échantillon. L'effet de "patchwork" est ainsi supprimé, et la cohérence de l'image de synthèse est à nouveau assurée. Cette méthode pourrait cependant paraître trop lente si l'on s'attachait à réaliser une croissance de trop grande qualité, et l'on a alors proposé de réaliser par croissance progressive une première image de synthèse approximative, occupant, lorsque la croissance est achevée, une région prédéterminée, puis, en tirant bénéfice du fait qu'on dispose, à titre de référence, de l'échantillon de départ qui constitue un original de la texture, d'opérer une sorte de décoration de cette première image de synthèse approximative en remplaçant, selon un critère prédéterminé, des blocs de ladite première image par des blocs de l'échantillon de référence qui lui ressemblent le plus. Ce processus présente quelque analogie (à cette exception près que la méthode ici proposée est mise en oeuvre de façon automatique à l'aide de moyens techniques) avec la manière d'agir d'un artisan ou d'un peintre à qui l'on aurait remis un échantillon de texture comprenant quelques motifs et qui serait alors capable de restituer tout un coupon, d'une taille aussi grande que ce que l'on pourrait souhaiter, en utilisant simplement les motifs, donnés avec une certaine résolution, et la disposition relative de ces motifs. Les essais réalisés ont montré qu'avec une telle méthode de synthèse, la reconstitution d'image est rapide et la qualité d'image satisfaisante quant à son apparence de cohérence. En outre, du fait que l'on calcule les caractéristiques structurelles non plus sur toute une texture, mais seulement pour un échantillon de celle-ci, on réduit considérablement le volume des données à traiter.

Un autre but de l'invention est d'exploiter l'importante réduction du volume de données obtenue avec la méthode décrite ci-dessus pour une transmission économique d'informations relatives à une séquence d'images.

A cet effet, l'invention concerne une méthode de transmission et/ou de stockage de signaux de texture incluant la mise en oeuvre d'une méthode de synthèse de texture telle que celle qui vient d'être décrite et dans laquelle les étapes de ladite méthode de synthèse dans toute la région prédéterminée sont précédées des étapes suivantes :

(A) extraction d'un échantillon représentatif de la texture considérée ;
(B) codage de cet échantillon ;
(C) transmission et/ou stockage des signaux codés ainsi obtenus ;
(D) décodage des signaux codés tels que transmis et/ou stockés.

La transmission et/ou le stockage ainsi effectué(e)(s) est (sont) intéressant(e)(s), car le facteur de compression de données atteint est important au regard des méthodes de codage traditionnelles où la quantité des informations est proportionnelle au nombre des pixels. Dans le cas présent, cette quantité d'informations est nettement plus faible, puisque liée seulement à la taille de l'échantillon.

Un autre but de l'invention est encore de proposer des dispositifs ou systèmes de mise en oeuvre de ces méthodes.

L'invention concerne à cet effet tout d'abord un dispositif de synthèse de texture à partir de signaux vidéo numériques, ce dispositif comprenant :

(a) un circuit de calcul et de mémorisation, à partir de ceux de ces signaux qui sont associés à un ensemble de points d'image ou pixels constituant un échantillon dit de référence, de caractéristiques structurelles dudit échantillon ou de valeurs qui leur sont directement liées ;
(b) un circuit de restitution d'une image de synthèse approximative par croissance progressive dans une région prédéterminée et à partir des caractéristiques structurelles ainsi calculées et des signaux numériques correspondant audit échantillon de référence, ladite image de synthèse approximative étant subdivisée en blocs de pixels de taille identique ;
(c) un circuit de constitution de dictionnaire à partir de blocs considérés dans ledit échantillon de référence, et de même taille que ceux de ladite image de synthèse approximative ;
(d) un circuit dit de décoration de ladite image de synthèse approximative à partir des signaux de sortie dudit circuit de constitution de dictionnaire, par substitution d'un bloc de ce dictionnaire à chaque bloc de l'image de synthèse approximative.

De préférence, les caractéristiques structurelles choisies sont les moments statistiques du second ordre, le nombre de moments calculés étant fixé en fonction de la résolution voulue pour l'image de synthèse définitive, ce qui permet d'adapter aux nécessités ce volume des données. Une autre façon de réduire cette quantité de données consiste aussi à regrouper les valeurs des caractéristiques structurelles par secteurs du plan des coordonnées du vecteur de translation qui indexe la position relative de deux pixels, et à remplacer de telles valeurs par une valeur unique telle que leur moyenne.

Dans un mode de réalisation avantageux de l'invention, le circuit de restitution comprend lui-même :

(a) un circuit de génération d'un bruit blanc ayant l'histogramme de la texture à synthétiser, tel que celui-ci est défini par le circuit de calcul et de mémorisation ;
(b) une mémoire d'image recevant sur une première entrée lesdits signaux numériques correspondant à l'échantillon de référence et sur une deuxième entrée la sortie dudit circuit de génération de bruit blanc ;
(c) un circuit de fourniture de l'adresse du pixel courant, ladite adresse étant reçue par la mémoire d'image sur une troisième entrée ;
(d) un circuit d'assignation successive, à chaque pixel ainsi choisi, de chacune des L valeurs possibles du niveau de gris ;

(e) un circuit de calcul, pour chaque niveau de gris testé, des moments statistiques du deuxième ordre relatifs à l'image en cours de synthèse dans la mémoire d'image ;

(f) un circuit de calcul, pour chacune desdites L valeurs de niveau de gris, de la distance quadratique entre lesdits moments statistiques relatifs à l'image en cours de synthèse et les moments similaires tels que définis pour la texture d'origine par le circuit de calcul et de mémorisation, celle des distances calculées qui est la plus faible étant sauvegardée dans le circuit d'assignation, ainsi que la valeur de gris correspondante pour transmission de celle-ci à la mémoire d'image sur une quatrième entrée de cette mémoire.

Dans un perfectionnement de cette réalisation du dispositif de synthèse, le circuit de calcul et de mémorisation et/ou les circuits de constitution de dictionnaire et de décoration sont équipés de moyens de rebouclage qui permettent de mettre à nouveau en oeuvre, une ou plusieurs fois, les étapes correspondantes de calcul et de mémorisation de caractéristiques structurelles, et/ou de constitution de dictionnaire et de décoration, avec des blocs de taille différente à chaque fois, ces tailles de blocs choisies étant de préférence premières entre elles.

L'invention concerne d'autre part un dispositif de transmission et/ou de stockage de signaux de texture comprenant au moins un dispositif de synthèse de texture tel que décrit précédemment dans l'une ou l'autre des réalisations proposées, et comprenant, en amont dudit dispositif de synthèse, un circuit d'extraction d'échantillon, un circuit de codage des signaux correspondant audit échantillon extrait, des moyens de transmission et/ou stockage des signaux codés, et un circuit de décodage des signaux codés tels que transmis et/ou stockés.

L'invention concerne enfin un système de transmission et/ou stockage de signaux de texture appartenant à des images, comprenant au moins un dispositif de synthèse de texture comprenant également :

(1) un circuit de séparation de l'image courante d'entrée en deux sous-images contenant l'une les parties texturées de ladite image et l'autre ses parties non texturées ;

(2) un circuit de segmentation de ladite sous-image texturée en régions homogènes en texture éventuellement non connexes, dont les signaux de sortie sont fournis audit dispositif de synthèse de texture ;

(3) un circuit de codage des contours desdites régions homogènes en texture et un circuit de codage de la sous-image non texturée, ainsi que, après transmission et/ou stockage, un circuit de décodage desdits contours et un circuit de décodage des signaux de sous-image non texturée ;

(4) un circuit de reconstruction d'une image finale correspondant à ladite image courante d'entrée à partir des signaux de sortie desdits circuits de décodage et dudit dispositif de synthèse de texture.

Les particularités et avantages de l'invention apparaîtront maintenant de façon plus précise dans la description qui suit et dans les dessins annexés, donnés à titre d'exemples non limitatifs et dans lesquels :

- la figure 1 montre schématiquement un exemple de zone de croissance de l'image de synthèse de texture que l'on veut obtenir conformément à la méthode selon l'invention à partir d'un échantillon de ladite texture ;
- la figure 2 montre un exemple de réalisation d'un dispositif de synthèse de texture selon la présente invention ;
- la figure 3 montre, aux fins d'un regroupement des valeurs des moments du second ordre, une division possible du plan de translation utilisé pour l'indexation de la position relative de deux pixels ;
- les figures 4 et 5 montrent un exemple de réalisation respectivement d'un dispositif et d'un système de transmission et/ou stockage de signaux de texture comprenant au moins un dispositif de synthèse de texture selon la présente invention.

La méthode de synthèse de texture selon l'invention permet, à partir d'un échantillon de texture comprenant quelques motifs, de restituer automatiquement une image de synthèse de cette texture, aussi grande que l'on veut d'ailleurs, en utilisant pour cela chaque motif, donné avec une certaine résolution, et la disposition relative des motifs. Cette méthode comprend, en supposant que les informations relatives à l'échantillon sont par exemple disponibles sous la forme de signaux numériques quantifiés sur L niveaux (et correspondant ici, sans que cet exemple soit limitatif, à la luminosité des points d'image ou pixels de l'échantillon considéré), les étapes suivantes :

(a) à partir desdits signaux d'échantillon, calcul et mémorisation de caractéristiques structurelles de cet échantillon (ou, comme on le verra plus loin, de valeurs qui leur sont liées), par exemple de ses moments statistiques du second ordre, en ne tenant compte que des paires de pixels contenues dans l'échantillon, et en se limitant à un nombre déterminé de ces moments si l'on ne recherche pas une résolution élevée et si l'on veut limiter les calculs ;

(b) à partir des caractéristiques ainsi calculées et desdits signaux d'échantillon, restitution d'une première image de synthèse approximative par croissance progressive dans une zone de croissance ou région prédéterminée ;

(c) subdivision de cette image de synthèse approximative en blocs de pixels de taille identique ;

(d) à partir desdits signaux d'échantillon, constitution d'un dictionnaire de stockage de blocs de même taille que ceux de l'image de synthèse approximative restituée dans l'étape (b) ;

(e) en fonction d'un critère prédéterminé, décoration par remplacement de chaque bloc de cette image de synthèse approximative par un bloc de ce dictionnaire, pour constituer une image de synthèse définitive.

L'étude menée dans le document cité plus haut a conduit, on l'a vu, à sélectionner, pour rendre compte quantitativement d'une texture, par exemple les paramètres dits moments statistiques du second ordre. En effet, si l'on considère une image contenant N pixels à chacun desquels est associé un niveau de gris $X_i$ quantifié sur L niveaux de 0 à L-1 repérés par l'indice i, on constate que les attributs statistiques du premier ordre attachés à cette image, tels que moyenne, écart-type, histogramme normalisé, sont insuffisants pour permettre une discrimination entre deux textures : la moyenne ne renseigne que sur l'intensité moyenne de l'image, l'écart-type ne donne d'indication que sur la dispersion des niveaux de gris (c'est-à-dire le contraste global de l'image), l'histogramme donne seulement une estimation de la probabilité d'apparition d'un point dans une image sans pouvoir rendre compte de la répartition géométrique des points (cette probabilité ne dépend pas des autres niveaux de gris des points voisins dans l'image).

Or, dans une texture, la présence d'un niveau de gris est au contraire fortement corrélée avec les niveaux de gris de ces points voisins, et les statistiques du second ordre introduisent, elles, des conditions qui lient la probabilité d'apparition d'un niveau de gris en un point au niveau de gris des points voisins. Les moments du second ordre, en particulier, permettent de discriminer des textures du fait qu'ils condensent l'information contenue dans les histogrammes du second ordre correspondant aux différentes positions relatives des pixels de l'image considérés deux à deux.

Pour le calcul de ces moments, on définira les notations suivantes :

- x et y sont les coordonnées du pixel courant et $X_i(x,y)$ la luminosité (ou niveau de gris) qui lui est associée ;
- $\Delta_x$ et $\Delta_y$ désignent les composantes du vecteur $\Delta$ matérialisant la différence de position entre deux pixels dont l'un est le pixel courant et l'autre est un pixel de comparaison ;
- i est l'indice de repérage du niveau de gris du pixel courant, $i + \Delta$ celui du niveau de gris du pixel de comparaison, et I est le nombre de paires de pixels ou doublets $(i, i + \Delta)$ considérées dans l'image (I est voisin de N si l'on opère le calcul des moments sur toute l'image) ;
- $I_m$ et s désignent respectivement la valeur moyenne des niveaux de gris sur la zone de calcul des moments (ici sur l'image, en prenant I = N comme on le fera dans la suite) et l'écart-type de la luminosité (ou niveaux de gris) des pixels ;
- p et q sont des entiers positifs ou nuls qui définissent le degré d'approximation de l'histogramme bidimensionnel $H\Delta(X_i, X_{i+\Delta})$, cette approximation étant d'autant meilleure que p et q sont plus élevés.

Le calcul des moments s'effectue alors, pour une image (dans la suite de la description, pour la région de texture homogène plus particulièrement considérée), suivant la formule (1) :

$$S_{pq}(\Delta) \;=\; \frac{1}{N} \sum_{x,y} \frac{(X(x,y) - I_m)^{\,p}(X(x+\Delta_x, y+\Delta_y) - I_m)^{\,q}}{s^{p+q}} \quad (1)$$

Les moments du second ordre pourraient être calculés pour une infinité de valeurs, p et q variant de 0 à l'infini et $\Delta$ pouvant aussi varier théoriquement sans limites. Dans le cas présent, on limitera ces translations $\Delta$ en imposant par exemple à $\Delta$ de varier par pas de 1 pixel sur une fenêtre de par exemple 12 x 12 pixels, et la somme p + q sera choisie en fonction du plus ou moins grand nombre de calculs que l'on accepte d'effectuer. Le fait de soustraire la moyenne $I_m$ et de diviser par l'écart-type s assure une normalisation de ces moments du second ordre, c'est-à-dire les rend indépendants de la luminosité et du contraste global de ladite région de texture homogène considérée.

Pour abréger les notations, on appellera par la suite $S_{pq}$ ces moments. Dans la méthode de synthèse de texture présentée plus haut, l'étape (a) a donc permis le calcul de caractéristiques structurelles essentielles, ici par exemple les moments statistiques du second ordre, qui, on l'a vu, condensent l'information contenue dans les histogrammes du second ordre correspondant aux différentes positions relatives des pixels dans l'échantillon.

L'étape (b) permet alors de réaliser une première synthèse approximative de la texture d'origine, et est effectuée selon la série d'étapes suivante :

(1) on initialise tout d'abord la croissance de l'image à partir de l'échantillon par des pixels choisis de façon aléatoire suivant l'histogramme à 1 pixel ;

(2) on poursuit alors cette mise à jour des pixels dans une zone de croissance toujours plus grande autour de l'échantillon (ladite zone est en général centrée sur cet échantillon), selon les sous-étapes suivantes :

(i) la croissance de la taille de la zone implique d'abord un balayage des pixels, selon une succession qui peut être régulière ou au contraire aléatoire, par exemple en tirant les nouveaux pixels au hasard suivant une probabilité proportionnelle à :

$$e^{-\left(\frac{((x^2+y^2)^{\frac{1}{2}}-R(t))^2}{R_0^2}\right)} \qquad (2)$$

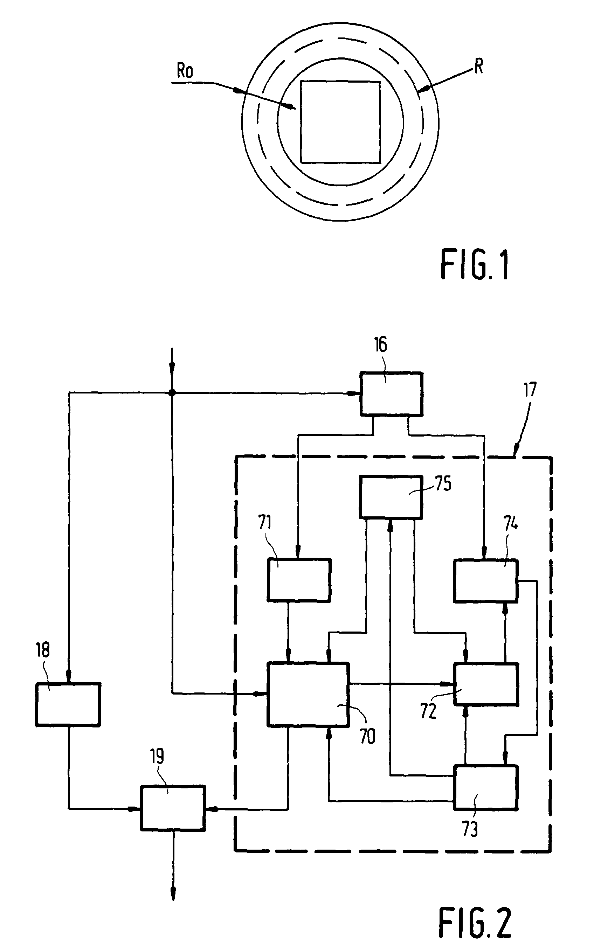

expression (2) dans laquelle x et y sont toujours les coordonnées du pixel courant, $R_o$ est l'épaisseur initiale de la zone (cette épaisseur étant par exemple comprise, en nombre de pixels, entre 1 et le demi-côté de l'échantillon, si l'échantillon est carré), et R(t) est le rayon moyen de ladite zone, ce rayon croissant avec le temps, par exemple linéairement (la figure 1 montre schématiquement un exemple de zone de croissance à partir d'un échantillon) ;

(ii) pour chaque pixel courant ainsi balayé, on examine différentes valeurs possibles, en calculant à chaque fois les nouvelles valeurs des moments $S_{pq}$ et en choisissant la valeur qui minimise un critère de distance entre les moments $S_{pq}$ de l'image en cours de synthèse et ceux de l'image de texture de référence, par exemple la valeur qui rend minimale l'expression E suivante (en poursuivant le balayage de l'échantillon jusqu'à ce que E atteigne effectivement une valeur suffisamment faible, définie par un seuil) :

$$E = \sum_{p,q,\Delta} (S_{pq}^{ref}(\Delta) - S_{pq}^{syn}(\Delta))^2 \qquad (3)$$

expression (3) dans laquelle p, q, $\Delta$ ont déjà été définis, et "ref" et "syn" correspondent respectivement aux deux images de référence et de synthèse ;

(iii) la croissance est interrompue lorsque le rayon R(t) atteint une valeur prédéterminée, par exemple deux fois la taille de l'image.

En ce qui concerne l'étape (c), on a choisi, dans le cas présent, de subdiviser l'image en blocs de taille 8 x 8 pixels. L'étape (d) est alors réalisée en extrayant de l'échantillon un dictionnaire constitué de blocs de même taille (ici 8 x 8), par exemple en prenant tous les blocs 8 x 8 contenus dans l'échantillon, ou bien, si l'on accepte une sensible augmentation du temps de calcul, en appliquant une méthode telle que celle reposant sur un algorithme de type LBG. Le rôle de cet algorithme, étudié par exemple par Linde, Buzo, Gray dans le document "An algorithm for vector quantizer design", IEEE Trans. Commun., vol. COM-28, janv. 1980, pp. 84-95, est de permettre la constitution d'un dictionnaire mieux adapté à un codage éventuel de la texture, et assurant en particulier un lissage des fluctuations statistiques présentes dans l'échantillon.

L'étape (e) consiste à remplacer chaque bloc de l'image de synthèse approximative par le bloc du dictionnaire le plus proche, par exemple au sens d'un critère de distance tel que la minimisation de la distance quadratique, donnée par l'expression (4) :

$$Dist = \sum_{x,y} (I^{dict}(x,y) - I(x,y))^2 \qquad (4)$$

où x,y sont les coordonnées des pixels (la somme est effectuée sur tous les pixels du bloc) et I et $I^{dict}$ désignent respectivement la luminosité du pixel de l'image de synthèse approximative et celle du pixel correspondant dans le dictionnaire. Lorsque tous ces remplacements sont achevés, une image de synthèse obtenue conformément à la méthode décrite est disponible.

Un exemple de dispositif de synthèse de texture pour la mise en oeuvre de cette méthode comprend tout d'abord, comme indiqué sur la figure 2, un circuit 16 de calcul et de mémorisation de moments du second ordre, en nombre proportionnel à la résolution voulue pour l'image de synthèse recherchée. Ce circuit 16 reçoit sur son entrée, qui est aussi celle du dispositif, les signaux numériques correspondant à la luminosité des pixels constituant l'échantillon de texture. De ces luminosités X(x,y), on déduit au préalable la moyenne $I_m$, l'écart-type s et l'histogramme à 1 pixel, selon les trois expressions (5, 6, 7) respectives suivantes ($n_i$ étant le nombre d'apparitions du niveau de gris $L_i$ parmi les n pixels de l'échantillon) :

$$I_m = \sum_n X(x,y)/n \quad (5)$$

$$p(X_i = L_i) = n_i/n \quad (7)$$

Le calcul des moments est alors effectué, et les moments ainsi calculés sont fournis à un circuit 17 de restitution d'une première image de synthèse approximative, dans une zone de croissance prédéterminée (on a vu plus haut qu'on avait, ici, choisi une zone égale à deux fois la taille de l'image recherchée).

Le circuit de restitution 17 comprend lui-même tout d'abord une mémoire d'image 70 qui, sur une première entrée, reçoit comme le circuit 16 les signaux numériques constituant l'échantillon de texture. Le circuit 17 comprend également un circuit de génération de bruit 71 dont la sortie est envoyée vers la mémoire 70, le bruit ainsi généré ayant l'histogramme de la texture à synthétiser (le circuit 71 comporte une connexion en provenance du circuit 16 de calcul et de mémorisation, dans lequel a été notamment déterminé ledit histogramme à un pixel) : en effet, avant que l'échantillon de texture de référence n'y prenne place au centre, on remplit initialement toute la mémoire 70 avec un bruit blanc, c'est-à-dire dont tous les niveaux sont sans aucune corrélation quoique répartis selon des probabilités correspondant à la répartition des niveaux de gris dans l'échantillon de texture de référence. Un circuit 72 effectue alors le calcul des moments statistiques du deuxième ordre relatifs à l'image en cours de synthèse dans la mémoire 70 (pour une comparaison ultérieure avec les moments similaires calculés pour l'image d'origine par le circuit 16).

Pour cette synthèse progressive dans la mémoire 70, des adresses de pixels vont être successivement choisies dans la zone de croissance souhaitée autour du noyau d'image initial constitué par l'échantillon. A chaque pixel courant ainsi choisi, un circuit d'assignation 73 alloue successivement l'une des L valeurs possibles que peut prendre le niveau de gris. Toutes les L valeurs sont testées en séquence et, à l'issue des L tests, celle (notée par exemple $L_{min}$) qui conduit à un calcul d'erreur le plus favorable (calcul effectué comme indiqué ci-après) est retenue pour être finalement assignée au pixel courant. Cette valeur est sauvegardée, ainsi que l'erreur correspondante. Le calcul d'erreur est effectué par un circuit de calcul et de comparaison 74, qui reçoit d'une part les moments statistiques de la texture d'origine (calculés et fournis par le circuit 16 comme indiqué plus haut) et d'autre part les moments statistiques relatifs à la texture en cours de synthèse (calculés et fournis par le circuit 72) et qui, à partir de ces grandeurs, effectue par exemple le calcul de la distance quadratique entre ces moments : dans le cas de cet exemple, c'est la valeur $L_{min}$ qui conduit à la distance minimale en sortie du circuit 74 qui est sauvegardée.

Le circuit de restitution 17 comprend enfin un circuit 75 de fourniture d'adresse qui a pour fonction de produire l'adresse du pixel courant pour lequel vont avoir lieu les L tests et la sélection de $L_{min}$. Si (x,y) est l'adresse d'un pixel (à situer dans une couronne croissant progressivement autour du noyau initial constitué par l'échantillon), sa probabilité d'être tirée est donnée par l'expression (2) donnée précédemment. Comme l'indique la figure 2, ce circuit 75 reçoit du circuit d'assignation 73 le signal de commande pour le tirage d'une nouvelle adresse de pixel et fournit à la mémoire d'image 70, ainsi qu'au circuit 72 de calcul de moments statistiques, cette nouvelle adresse.

Le fonctionnement de ce circuit de restitution 17 est le suivant. Le circuit 71 génère un bruit blanc dans la mémoire 70, puis l'échantillon est placé au centre de cette mémoire. Le circuit 75 délivre alors la première adresse du pixel courant, et le circuit 73 alloue à ce pixel une première valeur de niveau de gris. Le circuit 72 calcule pour l'image en cours de synthèse les moments statistiques et le circuit 74 effectue à partir de ceux-ci et des moments similaires associés à la texture d'origine le calcul de distance quadratique. La distance minimale et la valeur L qui lui correspond sont sauvegardées dans le circuit 73, avant que celui-ci n'alloue au pixel courant une autre valeur de niveau de gris. Si la nouvelle distance calculée est alors inférieure à celle enregistrée dans le circuit 73, elle est sauvegardée à sa place, ainsi que la valeur $L_{min}$ de niveau de gris correspondante, et ainsi de suite jusqu'à ce que toutes les valeurs possibles de niveau de gris aient été testées. On assigne alors définitivement à ce pixel la valeur de niveau de gris $L_{min}$ à laquelle a correspondu la distance minimale, et l'on réitère la procédure qui vient d'être décrite pour une autre adresse de pixel jusqu'à ce que toute la zone de croissance prédéterminée prévue ait donné lieu à une telle assignation définitive pour chaque pixel.

Les signaux numériques constituant l'échantillon de texture sont, enfin, envoyés également vers un circuit 18 de constitution de dictionnaire qui, dans le cas présent, construit un dictionnaire de blocs en prenant par exemple tous les blocs inclus dans l'échantillon et en les indexant par la translation correspondante. L'information de translation est donnée par exemple par la position du pixel situé en haut et à gauche du bloc par rapport à celle du pixel situé en haut et à gauche de l'échantillon. Comme on l'a vu plus haut, le dictionnaire peut être constitué d'autres façons, et notamment à l'aide de la méthode citée précédemment. Un circuit 19 dit de décoration reçoit alors la sortie du circuit de restitution 17 (constituée par la sortie de la mémoire d'image 70) et du circuit de constitution de dictionnaire 18 et opère le remplacement, indiqué plus haut dans l'étape (e), de chaque bloc de l'image de synthèse approximative par le bloc correspondant du dictionnaire, au sens du critère retenu (critère de minimisation de la distance quadratique, dans l'exemple cité précédemment). La sortie du circuit 19 constitue l'image de synthèse de texture délivrée par le dispositif selon l'invention.

Bien entendu, la présente invention n'est pas limitée aux exemples décrits, à partir desquels des variantes peuvent être proposées sans pour cela sortir du cadre de l'invention.

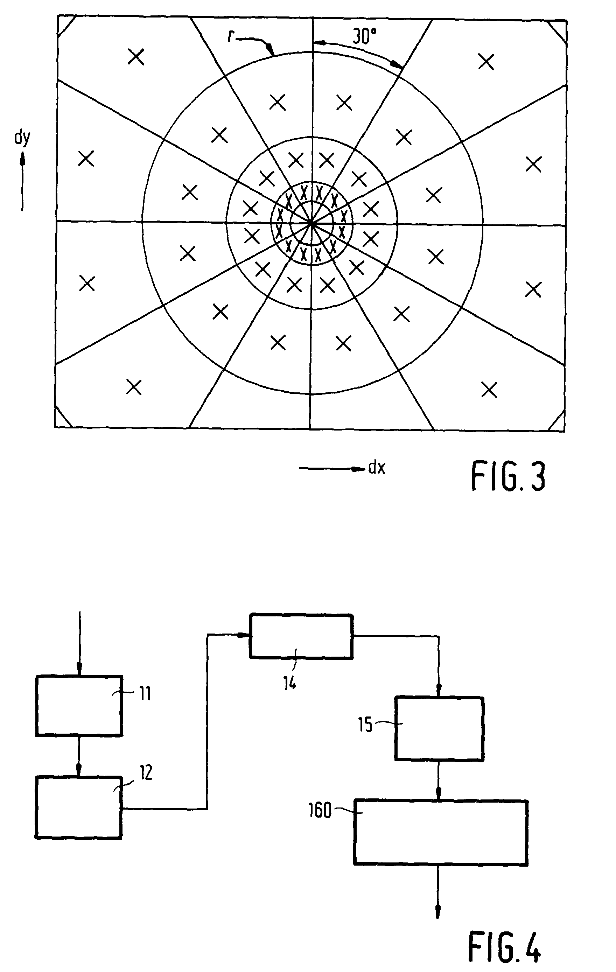

En particulier, la méthode de synthèse de texture mise en oeuvre dans le dispositif de synthèse selon l'invention peut être améliorée de la façon suivante. Les caractéristiques structurelles mémorisées dans l'étape (a) de ladite méthode de synthèse peuvent par exemple être remplacées par des valeurs qui leur sont liées. Dans l'exemple précédent, les coefficients exprimant les moments du second ordre peuvent notamment être regroupés en rassemblant ceux qui correspondent à une direction déterminée et à un module déterminé du vecteur $\Delta$ et en en effectuant par exemple la moyenne. Un nouveau coefficient vient alors remplacer ce regroupement et est indexé par la valeur centrale déterminée pour le module pour ce regroupement. La figure 3 montre dans le plan $(d_x, d_y)$ des coordonnées du vecteur $\Delta$ un exemple possible de regroupement, avec une division du plan des vecteurs $\Delta$ en secteurs délimités par des cercles centrés sur le point de module nul et de rayons r croissants (par exemple selon une puissance de 2, avec r = 1, 2, 4, 8,...) et par des droites issues du point de module nul et se succédant avec des angles constants (par exemple de 30°) : les moments $S_{pq}$ de chaque secteur sont regroupés, la moyenne en est effectuée, et le nouveau coefficient qui se substitue à eux tout en constituant une valeur qui leur reste liée est indexé sur la position centrale indiquée par une croix. La variante ainsi décrite permet de réduire le nombre de coefficients à traiter, d'un ordre de grandeur déterminé par le rapport de leur nombre d'origine au logarithme de ce nombre, ce qui conduit à une notable réduction de la durée des calculs.

Une autre amélioration de la méthode de synthèse selon les étapes (a) à (e) peut être obtenue soit en renouvelant, après les étapes (d) et (e), au moins une deuxième série d'étapes (d') et (e'), respectivement identiques à (d) et (e) mais réalisées avec des blocs de taille différente (de préférence une taille incommensurable avec la précédente, par exemple 5x5 pour 8x8 précédemment), soit en effectuant une nouvelle étape de synthèse avec les coefficients $S_{pq}$. Ces deux variantes permettent une amélioration du rendu de la texture, par l'élimination des effets de bloc résiduels.

Ces variantes peuvent, bien entendu, être mises en place dans le mode de réalisation du dispositif selon l'invention décrit plus haut et qui comprend les éléments 16 à 19. En particulier, le circuit de calcul et de mémorisation 16 peut inclure l'opération de regroupement de moments du second ordre par secteurs (schématisée sur la figure 3) et de remplacement de ceux-ci par leur valeur moyenne ou une valeur ayant une signification comparable et qui leur est directement liée. D'autre part le dispositif selon l'invention peut être équipé, par exemple dans le circuit 16 de calcul et de mémorisation ou dans les circuits de constitution de dictionnaire 18 et de décoration 19, de moyens de rebouclage qui permettent de mettre à nouveau en oeuvre, une ou plusieurs fois, une étape de synthèse approximative avec les coefficients $S_{pq}$ ou bien des étapes (d') et (e') identiques aux étapes (d) et (e) mais réalisées avec des blocs de taille différente de celle choisie la première fois (là encore, des tailles de préférence premières entre elles).

Par ailleurs, une application particulièrement intéressante de l'invention peut consister à inclure la méthode de synthèse telle qu'exposée ci-dessus dans une méthode de transmission et/ou de stockage de signaux de textures. Plus précisément, une telle méthode peut être appliquée au codage d'images contenant des textures. En effet, on entend par texture une région d'image qui, sans être nécessairement uniforme, est relativement homogène quant à son aspect (il s'agit souvent d'une surface constituée d'un même matériau : bois, tissus, carrelage, etc...) et comprend donc un nombre restreint de motifs qui sont répétés plus ou moins fréquemment suivant une disposition déterminée, soit régulière, soit aléatoire. Il est donc envisageable de profiter de la redondance liée à la répétition des motifs pour comprimer les informations contenues dans l'image, en vue de leur transmission et/ou de leur stockage, puis de leur restitution ultérieure.

On sait par ailleurs, dans le cas d'images contenant différentes textures, procéder préalablement à la segmentation en régions homogènes en texture (voir par exemple la communication "Unsupervised segmentation of textured images", de X. Michel, R. Leonardi et A. Gersho, SPIE vol.1001, Visual Communication and Image Processing 88, pp. 582-590). Dans la description qui suit, on admettra que cette segmentation a été effectuée et que l'on dispose de l'une de ces régions homogènes, qui n'est d'ailleurs pas nécessairement connexe. Une méthode et un dispositif de synthèse selon l'invention sont maintenant exposés en considérant ladite région, et la généralisation au cas de l'image contenant différentes textures concluera la description.

On suppose donc que toute l'information caractérisant la texture de cette région homogène est contenue dans un échantillon (de taille w x h) directement extrait de ladite région. La méthode de transmission et/ou de stockage de signaux de texture conforme à l'invention comprend alors les étapes suivantes :

(A) extraction d'un échantillon représentatif de la texture considérée, par exemple en le prenant sensiblement au centre de la région ;
(B) codage de cet échantillon ;
(C) transmission des signaux codés (et/ou stockage de ceux-ci, selon l'application considérée) ;

(D) décodage des signaux codés correspondant à l'échantillon ;

(E) synthèse de texture dans toute la région constituant ladite zone de croissance prédéterminée prévue dans l'étape (b) citée précédemment.

Un exemple de dispositif de transmission et/ou de stockage de signaux de texture pour la mise en oeuvre d'une telle méthode, incluant donc au moins un dispositif de synthèse de texture tel que décrit précédemment, entre également dans le cadre de la présente invention. Ce dispositif, représenté sur la figure 4, comprend d'une part un circuit 11 d'extraction d'un échantillon, par région homogène en texture, et un circuit 12 de codage des signaux correspondant à l'échantillon ainsi extrait, et d'autre part, après transmission et/ou stockage des signaux codés par l'intermédiaire de moyens référencés 14 sur la figure (canal de transmission ou magnétoscope par exemple), un circuit 15 de décodage des signaux codés tels que transmis et/ou stockés et un dispositif 160 de synthèse de texture à partir des signaux décodés de sortie du circuit 15. Ce dispositif 160 de synthèse de texture, qui comprend les éléments 16 à 19 décrits plus haut, n'a pas été représenté à nouveau en détail sur la figure 4.

Bien évidemment, les circuits 11 à 15 peuvent, notamment par un rebouclage adéquat, être prévus pour assurer respectivement l'extraction de plusieurs échantillons correspondant à autant de textures et donc de régions homogènes d'image, le codage des signaux correspondant à chaque échantillon, leur transmission et/ou leur stockage, puis le décodage des signaux codés ainsi transmis et/ou stockés, la synthèse de texture qui suit ce décodage pouvant alors être assurée soit par un dispositif unique réactivé pour chaque lot de signaux décodés correspondant à chaque échantillon d'origine, soit par plusieurs dispositifs de synthèse prévus en parallèle et recevant chacun respectivement le lot de signaux décodés correspondant à un seul échantillon d'origine.

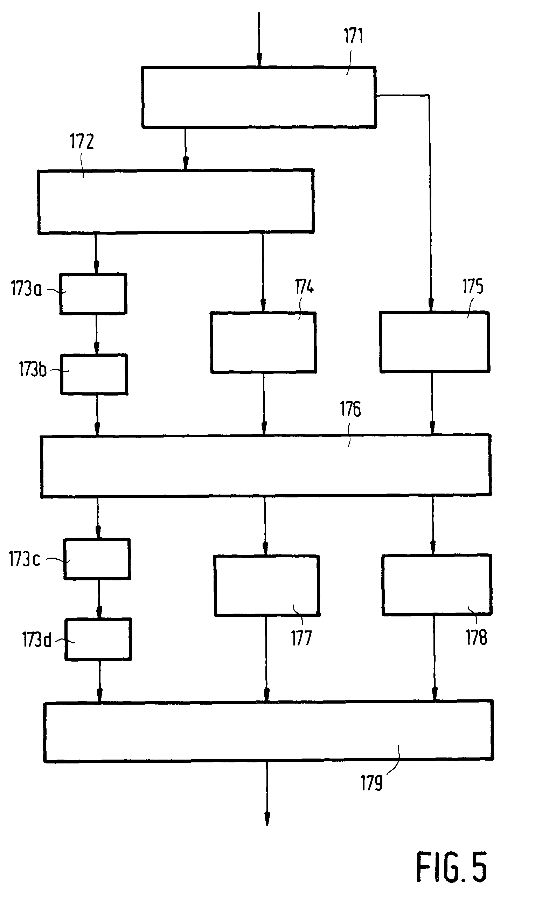

La figure 5 montre un exemple de réalisation d'un système de transmission et/ou stockage de signaux de texture appartenant à des images. Ce système, qui assure une compression efficace de données, comprend ici tout d'abord un circuit 171 de séparation de l'image courante en deux sous-images contenant la première les parties texturées de ladite image et la seconde ses parties non texturées. La seconde sous-image peut être obtenue par exemple à l'aide d'un filtre passe-bas, et la première sous-image en est déduite par différence avec l'image avant séparation, ce filtrage et cette soustraction étant les fonctions exécutées par le circuit 171.

La sous-image texturée est alors envoyée vers un circuit 172 de segmentation qui procède à la segmentation de cette sous-image en régions homogènes en texture (par exemple selon la méthode décrite dans la communication déjà mentionnée de X. Michel, R. Leonardi et A. Gersho), et ce circuit 172 envoie les différentes textures ainsi constituées vers un dispositif de synthèse de texture similaire à celui qui a été décrit précédemment en référence à la figure 4. Un tel dispositif comprend donc un circuit 173a d'extraction d'échantillons (autant d'échantillons que de textures constituées après segmentation), un circuit 173b de codage des signaux correspondant à chacun des échantillons extraits, des moyens de transmission et/ou stockage des signaux codés, un circuit 173c de décodage des signaux codés (correspondant à chaque échantillon) tels que transmis et/ou stockés, et un dispositif 173d de synthèse de texture tel que défini précédemment et exécutant les mêmes fonctions (calcul et mémorisation de caractéristiques structurelles, restitution d'images de synthèse approximative, constitution de dictionnaires, décoration finale).

Le circuit de segmentation 172 envoie également vers un circuit 174 de codage de contours les contours des régions homogènes en texture. Ce circuit 174 code ces différents contours par exemple selon la méthode décrite dans la thèse de R. Léonardi, Ecole Polytechnique de Lausanne, Suisse, n° 691, 1987, et les signaux ainsi codés sont fournis à des moyens de transmission et/ou stockage. Enfin, un circuit 175 de codage de la sous-image non texturée, reçue directement du circuit de séparation 171, fournit un troisième ensemble de signaux codés à des moyens de transmission et/ou stockage. Ces moyens présents en sortie des circuit 173b, 174 et 175 sont regroupés sur la figure en une seule représentation et référencés 176.

Ayant ainsi transmis et/ou stocké les divers signaux codés qui leur sont fournis, ces moyens 176 délivrent alors de façon correspondante des signaux à décoder qui sont d'une part les signaux de texture, fournis comme on l'a dit plus haut au circuit de décodage 173c, d'autre part les signaux de contours de textures, fournis à un circuit 177 de décodage des contours codés par le circuit 174, et enfin les signaux de sous-image non texturée, fournis à un circuit 178 de décodage de la sous-image non texturée codée par le circuit 175. Les textures synthétisées en sortie du dispositif 173d, les contours restitués par le circuit 177, et la sous-image reconstituée en sortie du circuit 178 sont alors fournis à un circuit 179 de reconstruction d'image finale, qui exécute les opérations inverses de celles effectuées par les circuits de séparation 171 et de segmentation 172 et délivre une image finale correspondant à l'image courante reçue à l'entrée dudit circuit 171.

On notera également, en référence aux figures 4 et 5, qu'une compression de données encore plus importante est obtenue si, avant leur transmission, le ou les échantillons (en sortie respectivement du circuit 11, sur la figure 4, ou du circuit 173a, sur la figure 5) sont traités selon une technique de compression telle que celle faisant successivement appel à une transformation cosinus discrète (DCT), une quantification des coefficients résultant de cette transformation, et un codage à longueur variable (VLC) des valeurs quantifiées.

**Revendications**

1. Méthode de synthèse de texture à partir de signaux vidéo numériques, la méthode comprenant les étapes suivantes :

   (a) à partir de ceux de ces signaux qui sont associés à un ensemble de points d'image ou pixels constituant un échantillon dit de référence, calcul et mémorisation de caractéristiques structurelles dudit échantillon ou de valeurs qui leur sont directement liées ;
   (b) à partir des caractéristiques ainsi calculées et de l'échantillon, restitution d'une image de synthèse approximative par croissance progressive dans une région prédéterminée ;
   (c) subdivision de ladite image de synthèse approximative en blocs de pixels de taille identique ;
   (d) à partir de l'échantillon, constitution d'un dictionnaire de stockage de blocs de même taille que ceux de ladite image de synthèse approximative;
   (e) en fonction d'un critère prédéterminé, décoration par remplacement de chaque bloc de cette image de synthèse approximative par un bloc du dictionnaire, pour constituer une image de synthèse définitive.

2. Méthode de transmission et/ou stockage de signaux de texture incluant la mise en oeuvre d'une méthode de synthèse de texture selon la revendication 1, dans laquelle les étapes de cette méthode de synthèse dans ladite région prédéterminée sont précédées des étapes suivantes :

   (A) extraction d'un échantillon représentatif de la texture considérée ;
   (B) codage de cet échantillon ;
   (C) transmission et/ou stockage des signaux codés ainsi obtenus ;
   (D) décodage des signaux codés tels que transmis et/ou stockés.

3. Dispositif de synthèse de texture à partir de signaux vidéo numériques, le dispositif comprenant :

   (a) un circuit de calcul et de mémorisation, à partir de ceux de ces signaux qui sont associés à un ensemble de points d'image ou pixels constituant un échantillon dit de référence, de caractéristiques structurelles dudit échantillon ou de valeurs qui leur sont directement liées ;
   (b) un circuit de restitution d'une image de synthèse approximative par croissance progressive dans une région prédéterminée et à partir des caractéristiques structurelles ainsi calculées et des signaux numériques correspondant audit échantillon de référence, ladite image de synthèse approximative étant subdivisée en blocs de pixels de taille identique ;
   (c) un circuit de constitution de dictionnaire à partir de blocs considérés dans ledit échantillon de référence, et de même taille que ceux de ladite image de synthèse approximative ;
   (d) un circuit dit de décoration de ladite image de synthèse approximative à partir des signaux de sortie dudit circuit de constitution de dictionnaire, par substitution d'un bloc de ce dictionnaire à chaque bloc de l'image de synthèse approximative.

4. Dispositif selon la revendication 3, dans lequel lesdites caractéristiques structurelles sont les moments statistiques du deuxième ordre, le nombre de moments calculés étant fixé en fonction de la résolution voulue pour ladite image de synthèse définitive.

5. Dispositif selon la revendication 4, dans lequel les valeurs des moments sont regroupées par secteurs du plan des coordonnées des pixels de l'échantillon et remplacées par une valeur unique telle que la moyenne de ces moments.

6. Dispositif selon l'une des revendications 4 et 5, dans lequel le circuit de restitution comprend lui-même :

   (a) un circuit de génération d'un bruit blanc ayant l'histogramme de la texture à synthétiser, tel que celui-ci est défini par le circuit de calcul et de mémorisation ;
   (b) une mémoire d'image recevant sur une première entrée lesdits signaux numériques correspondant à l'échantillon de référence et sur une deuxième entrée la sortie dudit circuit de génération de bruit blanc ;
   (c) un circuit de fourniture de l'adresse du pixel courant, ladite adresse étant reçue par la mémoire d'image sur une troisième entrée ;
   (d) un circuit d'assignation successive, à chaque pixel ainsi choisi, de chacune des L valeurs possibles du niveau de gris ;

(e) un circuit de calcul, pour chaque niveau de gris testé, des moments statistiques du deuxième ordre relatifs à l'image en cours de synthèse dans la mémoire d'image ;

(f) un circuit de calcul, pour chacune desdites L valeurs de niveau de gris, de la distance quadratique entre lesdits moments statistiques relatifs à l'image en cours de synthèse et les moments similiaires tels que définis pour la texture d'origine par le circuit de calcul et de mémorisation, celle des distances calculées qui est la plus faible étant sauvegardée dans le circuit d'assignation, ainsi que la valeur de gris correspondante pour transmission de celle-ci à la mémoire d'image sur une quatrième entrée de cette mémoire.

7. Dispositif selon l'une des revendications 3 à 6, dans lequel le circuit de calcul et de mémorisation et/ou les circuits de constitution de dictionnaire et de décoration sont équipés de moyens de rebouclage qui permettent de mettre à nouveau en oeuvre, une ou plusieurs fois, les étapes correspondantes de calcul et de mémorisation de caractéristiques structurelles, et/ou de constitution de dictionnaire et de décoration, avec des blocs de taille différente à chaque fois.

8. Dispositif de transmission et/ou stockage de signaux de texture comprenant au moins un dispositif de synthèse de texture selon l'une des revendications 3 à 7, le dispositif comprenant en amont dudit dispositif de synthèse, un circuit d'extraction d'échantillon, un circuit de codage des signaux correspondant audit échantillon extrait, des moyens de transmission et/ou stockage des signaux codés, et un circuit de décodage des signaux codés tels que transmis et/ou stockés.

9. Système de transmission et/ou stockage de signaux de texture appartenant à des images, ledit système comprenant au moins un dispositif de synthèse de texture selon l'une des revendications 3 à 7, le système comprenant également :

(1) un circuit de séparation de l'image courante d'entrée en deux sous-images contenant l'une les parties texturées de ladite image et l'autre ses parties non texturées ;

(2) un circuit de segmentation de ladite sous-image texturée en régions homogènes en texture éventuellement non connexes, dont les signaux de sortie sont fournis audit dispositif de synthèse de texture ;

(3) un circuit de codage des contours desdites régions homogènes en texture et un circuit de codage de la sous-image non texturée, ainsi que, après transmission et/ou stockage, un circuit de décodage desdits contours et un circuit de décodage des signaux de sous-image non texturée ;

(4) un circuit de reconstruction d'une image finale correspondant à ladite image courante d'entrée à partir des signaux de sortie desdits circuits de décodage et dudit dispositif de synthèse de texture.

10. Système selon la revendication 9, dans lequel ledit circuit de séparation comprend un filtre passe-bas pour délivrer ladite sous-image non texturée et un soustracteur pour délivrer par différence entre l'image courante d'entrée et la sous-image non texturée ladite sous-image texturée.

## Patentansprüche

1. Verfahren zur Textursynthese aus digitalen Videosignalen, wobei das Verfahren folgende Schritte umfaßt:

(a) ausgehend von denjenigen dieser Signale, die zu einer Gesamtheit von Bildelementen oder Pixeln gehören, die ein sogenanntes Bezugsmuster bilden, eine Berechnung und Speicherung von Strukturcharakteristika des genannten Musters oder von direkt damit zusammenhängenden Werten,

(b) ausgehend von den so berechneten Charakteristika und dem Muster, Restitution eines Näherungssynthesebildes durch fortschreitende Ausweitung in einem vorbestimmten Bereich,

(c) Unterteilung des genannten Näherungssynthesebildes in Blöcke von Pixeln mit gleichem Umfang,

(d) ausgehend von dem Muster, Erstellung einer Tabelle zur Speicherung von Blöcken mit dem gleichen Umfang wie die des genannten Näherungssynthesebildes,

(e) abhängig von einem vorbestimmten Kriterium, Ausgestaltung durch Ersetzen jedes Blocks dieses Näherungssynthesebildes durch einen Block der Tabelle zur Bildung eines endgültigen Synthesebildes.

2. Verfahren zur Übertragung und/oder Speicherung von Textursignalen, in dem ein Verfahren zur Textursynthese nach Anspruch 1 ausgeführt wird und bei dem den Schritten dieses Verfahrens zur Synthese in dem gesamten vorbestimmten Bereich die folgenden Schritte vorangehen:

**EP 0 545 475 B1**

(A) Extrahierung eines für die betrachtete Textur repräsentativen Musters;
(B) Codierung dieses Musters;
(C) Übertragung und/oder Speicherung der so erhaltenen codierten Signale;
(D) Decodierung der so übertragenen und/oder gespeicherten codierten Signale.

3. Anordnung zur Textursynthese aus digitalen Videosignalen, wobei die Anordnung folgendes umfaßt:

(a) eine Schaltung zur Berechnung und Speicherung von Strukturcharakteristika des Musters oder von Werten, die in direkten Zusammenhang mit ihm stehen, ausgehend von denjenigen der Signale, die zu einer Menge von ein sogenanntes Bezugsmuster bildenden Bildpunkten oder Pixeln gehören;
(b) eine Schaltung zur Wiederherstellung eines Näherungssynthesebildes durch fortschreitende Ausweitung in einem vorbestimmten Bereich, ausgehend von den so berechneten Strukturcharakteristika und den digitalen Signalen, die dem genannten Bezugsmuster entsprechen, wobei das genannte Näherungssynthesebild in Blöcke von Pixeln mit gleichem Umfang unterteilt ist,
(c) eine Schaltung zur Erstellung einer Tabelle aus den betrachteten Blöcken in dem genannten Bezugsmuster, die den gleichen Umfang haben wie die des genannten Näherungssynthesebildes,
(d) eine sogenannte Ausgestaltungs-Schaltung zur Ausgestaltung des genannten Näherungssynthesebildes, ausgehend von den Ausgangssignalen der genannten Schaltung zur Erstellung einer Tabelle durch Ersetzen eines Blocks dieser Tabelle durch jeden Block des Näherungssynthesebildes.

4. Anordnung nach Anspruch 3, in der die genannten Strukturcharakteristika die statistischen Momente zweiter Ordnung sind, wobei die Anzahl der berechneten Momente in Abhängigkeit von der gewünschten Auflösung für das genannte endgültige Synthesebild festgelegt wird.

5. Anordnung nach Anspruch 4, in der die Werte der Momente durch Sektoren der Ebene der Koordinaten der Pixel des Musters umgruppiert und durch einen Einheitswert wie dem Mittelwert dieser Momente ersetzt werden.

6. Anordnung nach einem der Ansprüche 4 oder 5, in der die Schaltung zur Restitution selbst folgendes enthält:

(a) eine Schaltung zur Erzeugung eines weißen Rauschens mit dem Histogramm der zu synthetisierenden Textur, wie sie durch die Schaltung zur Berechnung und Speicherung definiert wird,
(b) einen Bildspeicher, der an einem ersten Eingang die genannten dem Bezugsmuster entsprechenden digitalen Daten empfängt und an einem zweiten Eingang das Ausgangssignal der genannten Schaltung zur Erzeugung eines weißen Rauschens,
(c) eine Schaltung zur Lieferung der Adresse des momentanen Pixels, wobei die genannte Adresse vom Bildspeicher über einen dritten Eingang empfangen wird,
(d) eine Schaltung zur aufeinanderfolgenden Zuweisung eines jeden von L möglichen Werten für die Graustufe zu jedem so ausgewählten Pixel,
(e) eine Schaltung zur Berechnung statistischer Momente zweiter Ordnung, die sich auf das gerade im Bildspeicher synthetisierte Bild beziehen, für jede getestete Graustufe,
(f) eine Schaltung zur Berechnung der quadratischen Distanz zwischen den genannten statistischen Momenten, die sich auf das gerade synthetisierte Bild beziehen, und den ähnlichen Momenten, wie sie für die Originaltextur durch de Schaltung zur Berechnung und Speicherung definiert werden, für jeden der genannten L Graustufenwerte, wobei diejenige der berechneten Distanzen, die am kleinsten ist, in der Zuweisungsschaltung gespeichert bleibt, ebenso wie im Bildspeicher an einem vierten Eingang dieses Speichers der entsprechende Grauwert für seine Übertragung gespeichert bleibt.

7. Anordnung nach einem der Ansprüche 3 bis 6, in dem die Schaltung zur Berechnung und Speicherung und/oder die Schaltungen zur Erstellung einer Tabelle und zur Ausgestaltung mit Wiederaufnahmemitteln versehen sind, die es ermöglichen, die entsprechenden Schritte zur Berechnung und Speicherung der Strukturcharakteristika und/oder zur Erstellung einer Tabelle und zur Ausgestaltung einmal oder mehrmals mit Blöcken von jedesmal unterschiedlicher Größe erneut durchzuführen.

8. Anordnung zur Übertragung und/oder Speicherung von Textursignalen, die mindestens eine Anordnung zur Textursynthese nach einem der Ansprüche 3 bis 7 umfaßt und stromaufwärts von dieser genannten Syntheseanordnung eine Schaltung zur Extrahierung eines Musters, eine Schaltung zur Codierung der Signale, die dem genannten extrahierten Muster entsprechen, Mittel zur Übertragung und/oder Speicherung der codierten Signale und eine Schaltung zur Decodierung der übertragenen und/oder gespeicherten codierten Signale.

9. System zur Übertragung und/oder Speicherung von zu Bildern gehörenden Textursignalen, das wenigstens eine Anordnung zur Textursynthese nach einem der Ansprüche 3 bis 7 und außerdem folgendes umfaßt:

(1) eine Schaltung zur Trennung des momentanen Eingangsbildes in zwei Teilbilder, von denen das eine die texturierten Teile des genannten Bildes und das andere dessen nicht-texturierten Teile enthält,
(2) eine Schaltung zur Unterteilung des genannten texturierten Teilbildes in hinsichtlich der Textur homogene und eventuell nicht verbundene Bereiche, die Ausgangssignale an die genannte Anordnung zur Textursynthese liefert,
(3) eine Schaltung zur Codierung der Umrisse der genannten hinsichtlich der Textur homogenen Bereiche und eine Schaltung zur Codierung des nicht texturierten Teilbildes sowie eine Schaltung zur Decodierung der Signale des nicht texturierten Teilbildes nach Übertragung und/oder Speicherung,
(4) eine Schaltung zur Wiederherstellung eines endgültigen Bildes, das dem genannten momentanen Eingangsbild entspricht, aus den Ausgangssignalen der genannten Schaltungen zur Decodierung und der genannten Anordnung zur Textursynthese.

10. System nach Anspruch 9, in dem die genannte Schaltung zur Trennung ein Tiefpaßfilter umfaßt, um das genannte nicht-texturierte Teilbild zu liefern, und einen Subtrahierer, um durch Differenz zwischen dem momentanen Eingangsbild und dem nicht-texturierten Teilbild das genannte texturierte Teilbild zu liefern.

**Claims**

1. A method for texture synthesis based on digital video signals, which method comprises the following steps:

(a) based on those signals which are associated with a group of pixels constituting a sample referred to as reference sample, computation and memorization of structural characteristics of said sample or of values directly associated therewith;
(b) based on the characteristics thus computed and on the sample, restitution of an approximate synthesis picture by progressive growth in a predetermine region;
(c) subdivision of said approximate synthesis picture into pixel blocks having an identical size;
(d) based on the sample, constitution of a dictionary for storing blocks of the same size as those of said approximate synthesis picture;
(e) as a function of a predetermined criterion, decoration by substituting each block of said approximate synthesis picture by a block of the dictionary for constituting a definitive synthesis picture.

2. A method of transmitting and/or storing texture signals, including the implementation of a texture synthesis method as claimed in Claim 1, which method comprises the steps of said synthesis method in said predetermined region which are preceded by the following steps:

(A) extraction of a sample which is representative of the texture considered;
(B) coding said sample;
(C) transmitting and/or storing coded signals thus obtained;
(D) decoding the coded signals which have been transmitted and/or stored.

3. A device for texture synthesis based on digital video signals, which device comprises:

(a) based on those signals which are associated with a group of pixels constituting a sample referred to as reference sample, a circuit for computing and memorizing structural characteristics of said sample or of values directly associated therewith;
(b) based on structural characteristics thus computed and on digital signals corresponding to said reference sample, a circuit for restituting an approximate synthesis picture by progressive growth in a predetermined region, said approximate synthesis picture being subdivided into pixel blocks having an identical size;
(c) based on blocks considered in said reference sample and having the same size as those of the approximate synthesis picture, a circuit for constituting a dictionary;
(d) based on output signals of said circuit for constituting the dictionary, a circuit for decorating said approximate synthesis picture by substituting a block of said dictionary for each approximate synthesis picture block.

4. A device as claimed in Claim 3, in which said structural characteristics are the statistical moments of the second order, while the number of computed moments is fixed as a function of the desired resolution for said definitive synthesis picture.

5. A device as claimed in Claim 4, in which the values of the moments are regrouped in sectors of the plane of coordinates of the pixels of the sample and substituted by a unique value such as the average value of said moments.

6. A device as claimed in Claims 4 and 5, in which said restitution circuit comprises:

(a) a circuit for generating white noise having the histogram of the texture to be synthesized and as defined by the computing and memorizing circuit;
(b) a picture memory receiving, at a first input, said digital signals corresponding to the reference sample and, at a second input, the output signal of said circuit for generating the white noise;
(c) a circuit for providing the address of the current pixel, said address being received by the picture memory at a third input;
(d) a circuit for successively assigning to each pixel thus chosen each one of the L possible grey level values;
(e) a circuit for computing, for each tested grey level, the statistical moments of the second order relative to the picture during synthesis in the picture memory;
(f) a circuit for computing, for each one of said L grey level values, the quadratic distance between said statistical moments relative to the picture during synthesis and the similar moments as defined for the original texture by the computing and memorizing circuit, while the smallest of the computed distances is preserved in the assigning circuit, as well as the corresponding grey value for transmission of said value to the picture memory at a fourth input of said memory.

7. A device as claimed in any one of Claims 3 to 6, in which the computing and memorizing circuit and/or the circuits for constituting the dictionary and for decoration are provided with feedback means which allow the corresponding steps of computing and memorizing the structural characteristics and/or for constituting the dictionary and for decoration to be restarted once or several times, with blocks each time having a different size.

8. A device for transmitting and/or storing texture signals, which device comprises at least a texture synthesis device as claimed in any one of Claims 3 to 7, which device comprises, upstream of said synthesis device, a circuit for extracting the sample, a circuit for coding the signals corresponding to said extracted sample, means for transmitting and/or storing the coded signals, and a circuit for decoding the coded signals which have been transmitted and/or stored.

9. A system for transmitting and/or storing texture signals associated with pictures, said system comprising at least a texture synthesis device as claimed in any one of Claims 3 to 7, which system also comprises:

(1) a circuit for separating the current input picture into two sub-pictures, one comprising the texturized parts of said picture and the other comprising the non-texturized parts;
(2) a circuit for segmenting said texturized sub-picture into regions which are homogeneous in texture but which may not be connected, whose output signals are applied to said texture synthesis device;
(3) a circuit for coding the contours of said regions which are homogeneous in texture and a circuit for coding the non-texturized sub-picture, as well as, after transmission and/or storage, a circuit for decoding said contours and a circuit for decoding the signals of the non-texturized sub-picture;
(4) a circuit for reconstructing a final picture corresponding to said current input picture from output signals of said decoding circuits and said texture synthesis device.

10. A system as claimed in Claim 9, in which said separating circuit comprises a low-pass filter for supplying said non-texturized sub-picture and a subtracter for supplying said texturized sub-picture by taking the difference between the current input picture and the non-texturized sub-picture.

FIG.1

FIG.2

FIG.3

FIG.4

FIG.5